# EUROPEAN PATENT APPLICATION

(11) **EP 4 790 770 A1**
(43) Date of publication of application: **12.08.2026**
(21) Application number: 25156237.7
(22) Date of filing: 06.02.2025
(51) Int. Cl.: H01M 8/0254, H01M 8/026, H01M 8/10

(54) **DIMPLE-SHAPED FUEL CELL BIPOLAR PLATE AND METHOD OF MANUFACTURING THE SAME**

(71) Applicant: Kinergy Fuel Cell SL., Bilbao (ES)
(72) Inventor: CHO, Sungho, 07218 Seoul (KR)
(74) Representative: Murgitroyd & Company

(57) **Abstract**

A method of manufacturing a dimple-based fuel cell bipolar plate includes heating a material for a bipolar plate of a fuel cell, molding the material for the bipolar plate, and cooling the bipolar plate, wherein the molding includes molding the material for the bipolar plate based on a primary shape, and molding the material for the bipolar plate based on a secondary shape, wherein a dimple is inserted into the bipolar plate using the molding. A fuel cell includes bipolar plates configured to supply a fuel and an oxidizer to an anode and a cathode, respectively, gas diffusion layers configured to diffuse gas associated with the fuel cell, and a polymer electrolyte membrane configured to facilitate an electrochemical reaction associated with the fuel cell, wherein a dimple is inserted into the bipolar plate using molding.

## Description

### BACKGROUND

### Field

The present disclosure relates to a dimple-shaped fuel cell bipolar plate and a method of manufacturing the same.

### Discussion of the Related Art

A fuel cell is an electrochemical device that converts hydrogen into electrical energy and heat. The fuel cell directly converts fuels such as hydrogen, methanol, and carbon monoxide into electrical energy without combustion by supplying the fuels to an anode, and supplying air, oxygen, chlorine, and hydrogen peroxide to a cathode.

Depending on the electrolyte used, the fuel cell is classified into a molten carbonate fuel cell (MCFC) using molten carbonate as an electrolyte, a polymer electrolyte membrane fuel cell (PEMFC) using a polymer membrane as an electrolyte, a solid oxide fuel cell (SOFC) using solid oxide such as ceramic oxide as an electrolyte, a phosphoric acid fuel cell (PAFC) using liquid phosphoric acid as an electrolyte, an alkaline fuel cell (AFC) using an alkali as an electrolyte and the like.

A metal bipolar plate is a key component of the solid oxide fuel cell (SOFC) that electrically connects unit cells to each other while separating fuels from air. The material for the metal bipolar plate of the SOFC must satisfy the requirements of high electrical conductivity, chemical stability in oxidizing/reducing atmospheres, low reactivity with other materials, similar coefficient of thermal expansion, and low gas permeability.

Generally, fuel cells are configured as a stack structure formed by stacking unit cells and require separation of fuel gas and air flowing on both ends of the unit cells in the stack structure, and a metal bipolar plate is used for such separation.

Therefore, a fuel cell is a device that generates electrical energy through reaction between hydrogen and oxygen, and generates electricity in the process in which hydrogen and oxygen flow depending on the shape of the bipolar plate. There is need for a shape and manufacturing method of the bipolar plate that are capable of enhancing the performance of the fuel cell.

### SUMMARY

The present disclosure is to address at least the above-mentioned problems and/or disadvantages and to provide at least the advantages described below. Accordingly, an aspect of the present disclosure is to provide a dimple-shaped fuel cell bipolar plate that promotes fuel cell reaction and increases driving force by inserting dimples into a flow channel of the bipolar plate and a method of manufacturing the same.

Additional aspects will be set forth in part in the description which follows and, in part, will be apparent from the description, or may be learned by practice of the presented embodiments of the disclosure.

According to the present disclosure, a method of manufacturing a dimple-based fuel cell bipolar plate includes heating a material for a bipolar plate of a fuel cell, molding the material for the bipolar plate, and cooling the bipolar plate, wherein the molding includes molding the material for the bipolar plate based on a primary shape, and molding the material for the bipolar plate based on a secondary shape, wherein a dimple is inserted into the bipolar plate using the molding.

According to the present disclosure, a fuel cell includes bipolar plates configured to supply a fuel and an oxidizer to an anode and a cathode, respectively, gas diffusion layers configured to diffuse gas associated with the fuel cell, and a polymer electrolyte membrane configured to facilitate an electrochemical reaction associated with the fuel cell, wherein a dimple is inserted into the bipolar plate using molding.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 illustrates a bipolar plate of a fuel cell according to embodiments;
FIG. 2 illustrates a shape of the bipolar plate according to embodiments.
FIG. 3 illustrates a dimple shape of the bipolar plate according to embodiments.
FIG. 4 illustrates a dimple structure of the bipolar plate of the fuel cell according to embodiments.
FIG. 5 illustrates a method of manufacturing the bipolar plate of the fuel cell according to embodiments.

### DETAILED DESCRIPTION

The preferred embodiments, examples of which are illustrated in the accompanying drawings, will be described in detail. The detailed description given below with reference to the accompanying drawings is intended to describe preferred embodiments rather than to illustrate only embodiments that may be implemented by the corresponding embodiments. The detailed description below includes details to provide a thorough understanding of the embodiments. However, it will be apparent to those skilled in the art that the embodiments may be implemented without such details.

Although most of the terms used in the embodiments are selected from those commonly used in the relevant field, some terms are arbitrarily selected by the applicant and the meanings thereof are described in detail in the following description as needed. Therefore, the embodiments should be understood based on the intended meaning of the terms, not the simple name or definition of the terms.

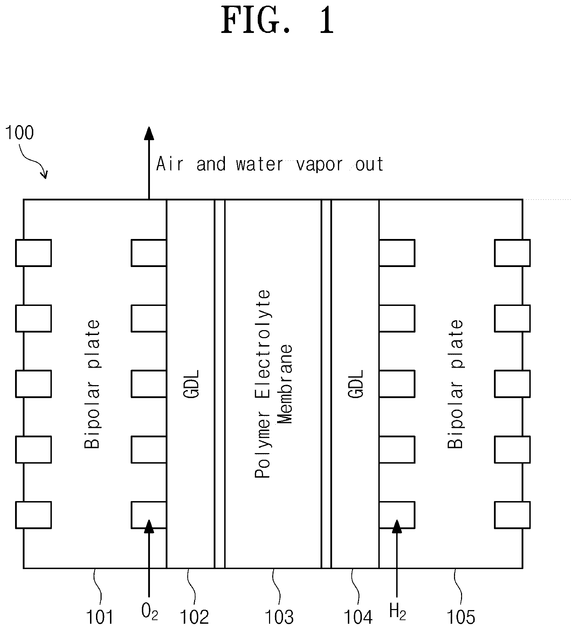

FIG. 1 illustrates a bipolar plate of a fuel cell according to embodiments.

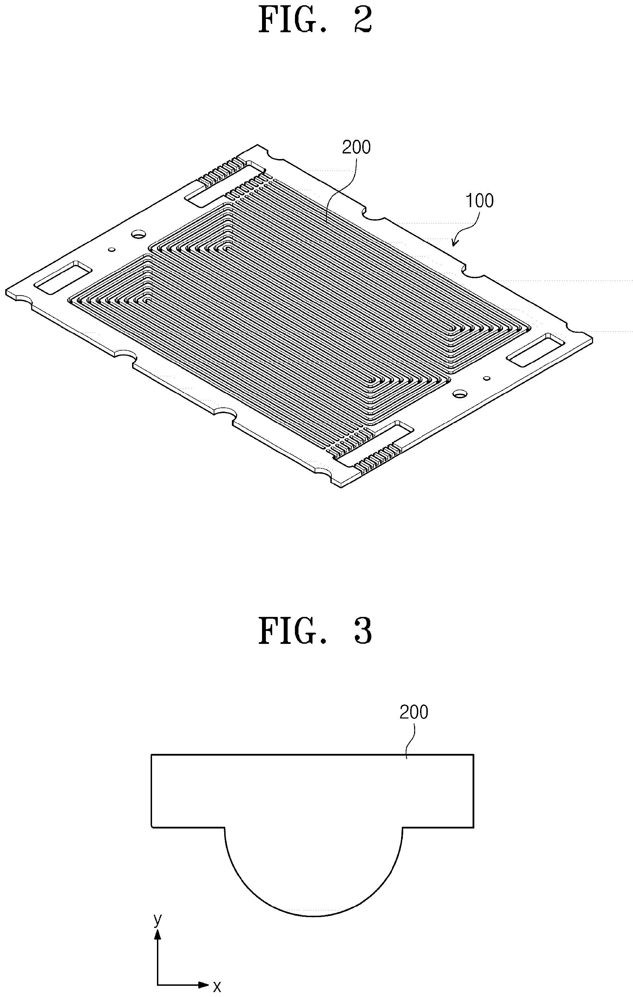

FIG. 2 illustrates a shape of the bipolar plate according to embodiments.

The fuel cell 100 according to the embodiments may include a bipolar plate 101, a gas diffusion layer (GDL) 102, a polymer electrolyte membrane 103, another gas diffusion layer (GDL) 104, and/or another bipolar plate 105.

The bipolar plate 101 or 105 (also referred to as a "bipolar plate") serves as a passage configured to supply fuel (hydrogen) or an oxidizer (oxygen or air) to a corresponding electrode. The bipolar plate electrically connects unit cells to each other in the fuel cell to allow electricity to flow. The bipolar plate may physically separate the fuel from the oxidizer to prevent mixing between the fuel and the oxidizer. The bipolar plate serves to disperse heat generated during the operation of the fuel cell. The bipolar plate may maintain the structural stability of the fuel cell. The bipolar plate may be formed based on graphite, metal, a composite material, or the like.

The gas diffusion layer (GDL) 102 or 104 serves as a passage for gas diffusion. The gas diffusion layer serves as a passage to allow reaction gas to pass through a flow channel 200 of the bipolar plate 101 or 105 of the fuel cell 100. The gas diffusion layer 102 serves as a passage to allow electrons to flow based on electrical connection. The gas diffusion layer serves as a passage to allow heat generated from a chemical reaction in the fuel cell to the bipolar plate 101 or 105.

The polymer electrolyte membrane (PEM) 103 moves protons (H⁺) generated through a fuel reaction from the anode to the cathode. The polymer electrolyte membrane facilitates the electrochemical reaction of the fuel cell. The polymer electrolyte membrane blocks electrons to prevent a short circuit. The polymer electrolyte membrane functions to physically separate a fuel such as hydrogen from an oxidizer such as oxygen or air thereby to prevent mixing between the fuel and the oxidizer. The polymer electrolyte membrane exhibits chemical and thermal stability to enable the fuel cell to operate stably for a long time.

FIG. 3 illustrates a dimple shape of the bipolar plate according to the embodiments.

The bipolar plate of the fuel cell according to the embodiments may include the dimple as shown in FIG. 3 in the flow channel 200 as shown in FIG. 2 in the fuel cell bipolar plate structure as in FIG. 1. In the structure of the bipolar plate into which the dimple is inserted, a side view of the dimple is shown in FIG. 3.

A method of manufacturing a fuel cell bipolar plate based on a dimple may include inserting a dimple into a flow channel of the bipolar plate. The dimple according to the embodiments may increase a mass transfer coefficient in the y-axis direction. For example, the heat transfer coefficient and the mass transfer coefficient have a proportional correlation. When the dimple is inserted into the flow channel of the bipolar plate based on the correlation between the heat transfer coefficient and the mass transfer coefficient, a great amount of gas may diffuse in the GDL layer. Compared to a bipolar plate having a flat cross-sectional surface without a dimple, the dimple-shaped bipolar plate generates local turbulence due to the dimple, thereby increasing the performance of the fuel cell. The dimple according to the embodiments may be circular and include at least one of a protrusion and/or a groove based on a y-axis.

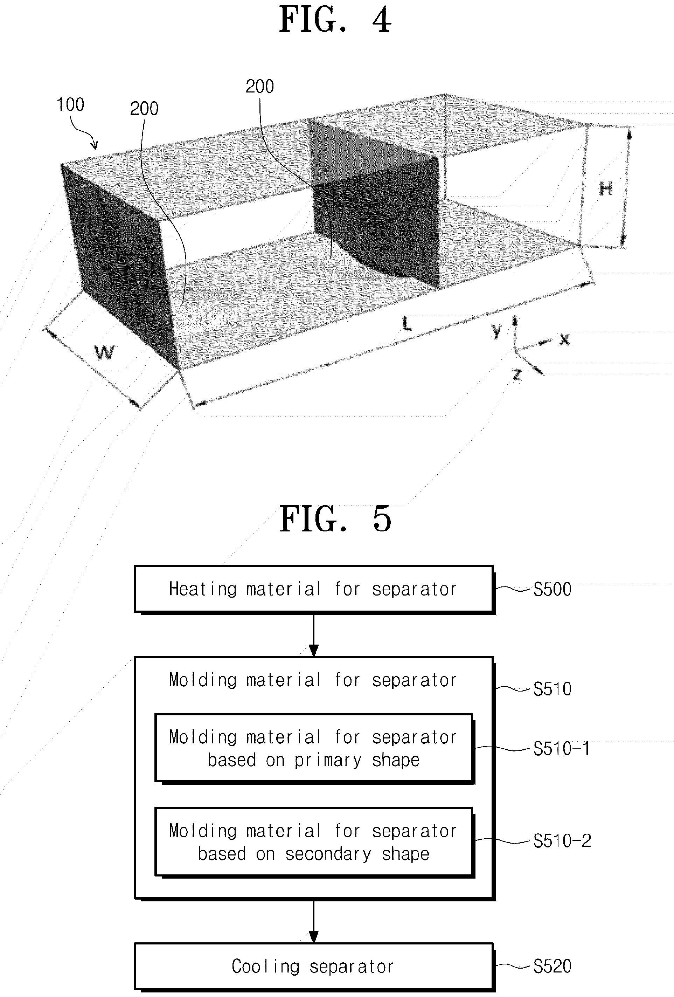

FIG. 4 illustrates the structure of the dimple of the bipolar plate of the fuel cell according to the embodiments.

The dimple 200 of the fuel cell 100 according to the embodiments may be inserted into the flow channel of the bipolar plate as shown in FIG. 4. The width (W), height (H), and length (L) of the flow channel may be varied according to the embodiments. For example, the width (W), the height (H) and the length (L) of the flow channel is 1 mm, 1 mm, and 10 mm, respectively, the radius of the dimple is 0.8 mm, the depth of the dimple is 0.2 mm to 0.3 mm, and the distance between the dimple and another dimple may be determined within the range of 2 mm to 10 mm. The values for the size of the flow channel and the size of the dimple are not limited to the levels defined above and may be varied depending on the configuration of the fuel cell.

FIG. 5 illustrates a method of manufacturing the bipolar plate of the fuel cell according to the embodiments.

The method of manufacturing a bipolar plate according to the embodiments may include mixing and heating a material for the bipolar plate (S500), molding a material for the bipolar plate (S510), and/or cooling the bipolar plate (S520).

In accordance with the method of manufacturing a bipolar plate according to the embodiments, the dimple-shaped bipolar plate may be directly formed using a mold pressing method without machining in a mold having a channel shape, instead of producing a plane sheet for manufacturing the bipolar plate and then machining the plane sheet. The heat, pressure, cooling, and process time for manufacturing the dimple-shaped bipolar plate may be varied according to the embodiments.

In the step of mixing and heating a material for the bipolar plate (S500), the material for the bipolar plate according to the embodiments may be mixed and heated in order to manufacture the bipolar plate of the fuel cell.

In the step of molding the material based on the shape for the bipolar plate (S510), the dimple in the flow channel of the bipolar plate is formed based on a molding method, as shown in FIGS. 4 and 5.

The molding (S510) according to the embodiments may be performed at least one or more times. For example, a mold may be inserted into the bipolar plate using two molding operations. In the first molding, the overall structure of the bipolar plate may be pressed, and in the second molding, the specific mold may be pressed. Due to the multiple molding operations, the accuracy of the bipolar plate may be increased and the time for manufacturing the bipolar plate may be reduced.

The step of molding according to the embodiments (S510) may include molding a material for the bipolar plate based on a primary shape (S510-1) and/or molding the material for the bipolar plate based on a secondary shape (S510-2). The primary shape may be an overall shape of the bipolar plate. The secondary shape may be a specific mold shape.

The step of cooling the bipolar plate may cool the bipolar plate into which the dimple is inserted (S520).

The cooling (S520) according to the embodiments may be performed using a high-frequency dryer. The dimple-pressed bipolar plate may be cooled quickly and accurately using the high-frequency dryer.

The bipolar plate having the shapes of FIGS. 4 to 5 may be manufactured through the manufacturing method of FIG. 5.

A method of manufacturing a dimple-shaped fuel cell bipolar plate includes mixing and heating a material for a bipolar plate of a fuel cell, molding the material for the bipolar plate, and cooling the bipolar plate, wherein the molding includes molding the material for the bipolar plate based on a primary shape, and molding the material for the bipolar plate based on a secondary shape, wherein a dimple is inserted into the bipolar plate based on the molding.

A fuel cell according to the embodiments includes bipolar plates 101 and 105 configured to supply fuel and an oxidizer to an anode and a cathode, respectively, gas diffusion layers 102 and 104 configured to diffuse gas associated with the fuel cell, and a polymer electrolyte membrane 103 configured to facilitate an electrochemical reaction associated with the fuel cell, wherein a dimple is inserted into the bipolar plate using a molding method. Here, the molding method may include a two-step molding method (S510-1 to S510-2).

The bipolar plate includes at least one dimple and the at least one dimple is inserted based on the width, height, and length of the flow channel of the bipolar plate, and the dimples in the flow channel of the bipolar plate may be inserted such that they are separated from each other by a predetermined distance.

The dimple may be inserted into the bipolar plate based on at least one shape of a protrusion or a groove.

The bipolar plate may include a non-uniform channel based on the dimple.

The radius of the dimple may be 0.8 mm, the depth of the dimple may be 0.2 to 0.3 mm, and the distance between the dimple and another dimple may be 2 to 3 mm.

A fuel cell according to the embodiments includes bipolar plates 101 and 105 configured to supply fuel and an oxidizer to an anode and a cathode, respectively, gas diffusion layers 102 and 104 configured to diffuse gas associated with the fuel cell, and a polymer electrolyte membrane 103 configured to facilitate an electrochemical reaction associated with the fuel cell, wherein a dimple is inserted into the bipolar plate using a molding method.

The method and device according to the embodiments provide the following effects.

The bipolar plate and the method of manufacturing the same according to the embodiments have the effects of increasing the performance and reaction efficiency of the bipolar plate of the fuel cell. The bipolar plate and the method of manufacturing the same according to the embodiments provide the effect of increasing the performance of the fuel cell bipolar plate with low complexity and at a low cost. The bipolar plate and the method of manufacturing the same according to the embodiments have the effect of facilitating gas diffusion in the fuel cell. The performance of the fuel cell may be increased by inserting a dimple into the bipolar plate, instead of the uniform channel of the conventional bipolar plate. In addition, unlike the conventional method of manufacturing the bipolar plate, by inserting the dimple into the bipolar plate using the molding method, unnecessary processes may be eliminated and a precise bipolar plate may be formed.

The embodiments have been described in terms of the method and/or the device, and the description of the method and the description of the device may be applied complementarily.

Although each drawing has been described for convenience of description, other embodiments may be designed by combination of the embodiments described in the respective drawings. In addition, designing a computer-readable recording medium in which a program for executing the embodiments described above is recorded according to the needs of those skilled in the art also falls within the scope of the embodiments. The device and method according to the embodiments are not limited to the configurations and methods of the embodiments described above, but the embodiments may be configured by selectively combining all or part of the embodiments such that various modifications are possible. Although the preferred embodiments of the embodiments have been illustrated, the embodiments are not limited to the specific embodiments described above, and various modifications are possible by those skilled in the art without departing from the gist of the embodiments claimed in the claims, and such modifications should not be construed separately from the technical idea or prospect of the embodiments.

Here, "/" and "," are interpreted as "and/or". For example, "A/B" is interpreted as "A and/or B", and "A, B" is interpreted as "A and/or B". In addition, "A/B/C" means "at least one of A, B, and/or C". In addition, "A, B, C" means "at least one of A, B, and/or C". In addition, "or" is interpreted as "and/or". For example, "A or B" may mean 1) "A" only, 2) "B" only, or 3) "A and B". In other words, "or" may mean "additionally or alternatively".

It will be understood that, although the terms "first", "second", etc. may be used herein to describe various elements of the embodiments, these elements should not be construed as being limited by these terms and are used merely in order to distinguish one element from another. For example, within the scope defined by the present disclosure, a "first user input signal" may be referred to as a "second user input signal" and similarly, a "second user input signal" may be referred to as a "first user input signal". The use of these terms should be construed as not departing from the scope of the various embodiments. Although both the first user input signal and the second user input signal are user input signals, they do not mean the same user input signals unless the context clearly indicates otherwise.

The terminology used to describe the embodiments is used for the purpose of describing particular embodiments and is not intended to be limiting of the embodiments. As used in the description of the embodiments and in the claims, the singular is intended to include the plural unless the context clearly dictates otherwise. The expression "and/or" may include all possible combinations of related elements. The term "comprise" specifies the presence of stated features, integers, steps, elements, and/or components, but does not preclude the presence or addition of one or more other features, integers, steps, elements, and/or components. Conditional expressions such as "if," and "when," used to describe the embodiments are not intended to be limited to only optional cases. When a particular condition is satisfied, a related action is performed in response to a particular condition or a related definition is intended to be interpreted.

As described above, the related features have been described in the best form for implementing the embodiments.

As described above, the embodiments may be applied in whole or in part to the fuel cell bipolar plate and the method of manufacturing the same.

The embodiments may be altered or modified by those skilled in the art within the scope of the embodiments.

The embodiments may encompass alterations/modifications and the alterations/modifications may fall within the scope of the claims and equivalents thereto.

As apparent from the foregoing, the bipolar plate and the method of manufacturing the same according to the embodiments provide an effect of increasing the performance and reaction efficiency of the bipolar plate of the fuel cell.

The bipolar plate and the method of manufacturing the same according to the embodiments provide an effect of increasing the performance of the fuel cell bipolar plate with low complexity and at low cost.

The bipolar plate and the method of manufacturing the same according to the embodiments have an effect of promoting gas diffusion in the fuel cell.

The above description is merely illustrative of the technical idea of the present disclosure. It will be apparent to those skilled in the art that various modifications and variations can be made in the present disclosure without departing from the spirit or scope of the disclosures.

Therefore, the above detailed description is to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## Claims

1. A method of manufacturing a dimple-based fuel cell bipolar plate comprising:
heating a material for a bipolar plate of a fuel cell;
molding the material for the bipolar plate; and
cooling the bipolar plate,
wherein the molding comprises:
molding the material for the bipolar plate based on a primary shape, and
molding the material for the bipolar plate based on a secondary shape,
wherein a dimple is inserted into the bipolar plate using the molding.

2. The method according to claim 1, wherein the bipolar plate comprises one or more dimples,
the one or more dimples are inserted based on a width, a height, and a length of a flow channel of the bipolar plate, and
the dimples in the flow channel of the bipolar plate are spaced apart by a predetermined distance.

3. The method according to claim 1, wherein each dimple is inserted into the bipolar plate based on at least one shape of a protrusion or a groove.

4. The method according to claim 2, wherein the bipolar plate comprises a non-uniform channel based on the dimple.

5. The method according to claim 1, wherein a radius of the dimple is 0.8 mm, a depth of the dimple is 0.2 to 0.3 mm, and a distance between the dimples is 2 to 3 mm.

6. A fuel cell comprising:
bipolar plates configured to supply a fuel and an oxidizer to an anode and a cathode, respectively;
gas diffusion layers configured to diffuse gas associated with the fuel cell; and
a polymer electrolyte membrane configured to facilitate an electrochemical reaction associated with the fuel cell,
wherein a dimple is inserted into the bipolar plate using molding.

7. The fuel cell according to claim 6, wherein the bipolar plate comprises one or more dimples,
the one or more dimples are inserted based on a width, a height, and a length of a flow channel of the bipolar plate, and
the dimples in the flow channel of the bipolar plate are spaced apart by a predetermined distance.

8. The fuel cell according to claim 6, wherein each dimple is inserted into the bipolar plate based on at least one shape of a protrusion or a groove.

9. The fuel cell according to claim 6, wherein the bipolar plate comprises a non-uniform channel based on the dimple.

10. The fuel cell according to claim 6, wherein a radius of the dimple is 0.8 mm, a depth of the dimple is 0.2 to 0.3 mm, and a distance between the dimples is 2 to 3 mm.
